# EUROPÄISCHE PATENTSCHRIFT

(11) **EP 3 921 475 B1**
(45) Veröffentlichungstag und Bekanntmachung des Hinweises auf die Patenterteilung: **22.02.2023**
(21) Anmeldenummer: 20700764.2
(22) Anmeldetag: 07.01.2020
(51) Int. Cl.: E02B 17/00, E04H 12/34, E02D 27/42, E02B 17/02, E04H 12/08

(54) **VERFAHREN ZUR BILDUNG EINER VERBINDUNG ZWISCHEN ZWEI ROHRSEGMENTEN UNTERSCHIEDLICHER WEITE UND ENTSPRECHEND HERGESTELLTE VERBINDUNG**
METHOD FOR FORMING A CONNECTION BETWEEN TWO TUBULAR SEGMENTS OF DIFFERENT WIDTHS AND CORRESPONDINGLY PRODUCED CONNECTION
PROCÉDÉ PERMETTANT DE CRÉER UN RACCORD ENTRE DEUX SEGMENTS TUBULAIRES DE LARGEUR DIFFÉRENTE, ET RACCORD PRODUIT SELON LEDIT PROCÉDÉ

(30) Priorität: 07.02.2019 DE 102019103070
(43) Veröffentlichungstag der Anmeldung: 15.12.2021
(73) Patentinhaber: RWE Renewables GmbH, 45141 Essen (DE)
(72) Erfinder: BARTMINN, Daniel, 25335 Elmshorn (DE)
(74) Vertreter: Cohausz & Florack
(86) Internationale Anmeldenummer: PCT/EP2020/050177
(87) Internationale Veröffentlichungsnummer: WO 2020/160857

(56) Entgegenhaltungen:
- EP-A1- 2 698 476
- WO-A1-2018/070868

## Beschreibung

Die Erfindung betrifft ein Verfahren zur Bildung einer Verbindung zwischen zwei Rohrsegmenten unterschiedlicher Weite, vorzugsweise eines turmartigen Bauwerks, insbesondere einer Windkraftanlage. Ferner betrifft die Erfindung eine Verbindung von zwei Rohrsegmenten unterschiedlicher Weite, vorzugsweise eines turmartigen Bauwerks, insbesondere einer Windkraftanlage, mit einem Ringspalt zwischen sich überlappenden Enden eines weiteren, äußeren Rohrsegments und eines schmaleren, inneren Rohrsegments.

Der relevante Stand der Technik ist im Dokument WO 2018/070868 A1 offengelegt.

Es sind unterschiedliche Verfahren bekannt, mit denen zwei Rohrsegmente unterschiedlicher Weiten miteinander verbunden werden können. Dabei ist die Weite der Rohrsegmente nach vorliegendem Verständnis so unterschiedlich, dass korrespondierende Enden der Rohrsegmente wenigstens abschnittsweise ineinander geschoben werden können. Für die Verbindung solcher Rohrsegmente sind beispielsweise Steckverbindungen bekannt. Das Fügen dieser Steckverbindung erfolgt dabei so, dass ein Rohsegment mit einem Ende auf ein Ende des anderen Rohrsegments aufgesteckt wird. Wenn die entsprechenden Rohrenden konisch und korrespondierend zueinander ausgebildet werden, kommt es auf diese Weise zu einer kraftschlüssigen und formschlüssigen Verbindung. Bedarfsweise kann zwischen die Enden der Rohrsegmente ein Dichtmittel eingebracht werden. Alternativ können die einander überdeckenden Enden der Rohrsegmente miteinander verschweißt oder mittels Bolzen miteinander verbunden werden. Diese Verbindungen sind jedoch relativ aufwendig und teuer in der Herstellung, und zwar insbesondere bei Rohrsegmenten großer Durchmesser, wie sie regelmäßig für turmartige Bauwerke Verwendung finden. Für Verbindungen, die durch verbolzen, verschweißen oder Reibschluss von Stahl auf Stahl basieren, gilt, dass bereits geringe Abweichungen der Rohrsegmente von der angenommenen ideal Geometrie die Verbindung deutlich schwächen können, weshalb die Verbindung auch nur schwer exakt berechnet werden kann.

Insbesondere für die Errichtung von Windkraftanlagen, im Besonderen von Offshore-Windkraftanlagen kommen auch sogenannte Groutverbindungen zum Einsatz, da diese sehr einfach, schnell und kostengünstig bereitgestellt werden können. Auch ist der Wartungsaufwand solcher Verbindungen überschaubar. Zur Herstellung von Groutverbindungen werden die korrespondierenden Enden der unterschiedlich weiten Rohrsegmente ineinandergesteckt, so dass sich zwischen den Rohrsegmenten ein Ringspalt ausbildet, der dann durch eine Vergussmasse, insbesondere ein Grout, ausgegossen wird. Nach dem Aushärten der Vergussmasse sind die beiden Rohrenden fest miteinander verbunden. Das Ausgießen des Ringspalts mit der Vergussmasse muss jedoch vor Ort erfolgen, was vergleichsweise aufwendig ist. Außerdem kann es beim Vergießen vor Ort zu fehlerhaften Verbindungen kommen, die nachträglich kaum erkannt und auch nicht mehr überarbeitet werden können. Andererseits sind die Anforderungen an die Maßhaltigkeit nicht so hoch wie bei verbolzten, verschweißten oder auf einem Reibschluss basierenden Verbindungen.

Um den vorgenannten Nachteilen zu begegnen, ist vorgeschlagen worden, zylindrische Rohrsegmente mit zwei voneinander beabstandeten und umlaufenden Metallringen zu versehen, deren korrespondierende Innenseiten konisch abgefräst werden, so dass die entsprechenden konischen Innenseiten der Metallringe beim Ineinanderstecken der Rohrsegmente in der Längsrichtung der Rohrsegmente formschlüssig aneinander liegen. Dies ist beispielsweise in der EP 2 910 682 A2 beschrieben. Das Bereitstellen der Ringe ist jedoch immer noch recht aufwendig und damit teuer, zumal bei der Fertigung der konischen Innenflächen nur sehr geringe Toleranzen in Kauf genommen werden können.

Daher liegt der vorliegenden Erfindung die Aufgabe zugrunde, das Verfahren und die Verbindung jeweils der eingangs genannten und zuvor näher erläuterten Art derart auszugestalten und weiterzubilden, dass Rohrsegmente unterschiedlicher Weite einfacher, zuverlässiger und kostengünstiger miteinander verbunden werden können.

Diese Aufgabe ist gemäß Anspruch 1 gelöst durch ein Verfahren zur Bildung einer Verbindung zwischen zwei Rohrsegmenten unterschiedlicher Weite, vorzugsweise eines turmartigen Bauwerks, insbesondere einer Windkraftanlage,
- bei dem das weitere Rohrsegment mit einem Ende teilweise über ein Ende des schmaleren Rohrsegments geschoben wird,
- bei dem die Rohrsegmente unter Ausbildung eines Ringspalts zwischen den Rohrsegmenten voneinander beabstandet positioniert werden,
- bei dem im Ringspalt zwischen den beiden Rohrsegmenten eine sich in Längsrichtung der Rohrsegmente und/oder in radialer Richtung erstreckende Trennschicht vorgesehen wird,
- bei dem der Ringspalt angrenzend zu der Trennschicht und zu wenigstens einer Seite der Trennschicht wenigstens teilweise mit einer Vergussmasse ausgegossen wird,
- bei dem beim Aushärten der Vergussmasse die Vergussmasse auf einer Seite der Trennschicht nur mit einem der Rohrsegmente und/oder die Vergussmasse auf der anderen Seite der Vergussmasse nur mit dem anderen Rohrsegment eine feste Verbindung eingeht und
- bei dem die Rohrsegmente nach dem Aushärten der Vergussmasse mit den zugehörigen, insbesondere durch die ausgehärtete Vergussmasse gebildeten, separaten Verbindungselementen wieder entlang der Trennschicht voneinander getrennt werden.

Die genannte Aufgabe wird ferner durch eine Verbindung nach dem Oberbegriff des Anspruchs 12 dadurch gelöst, dass mit der äußeren Umfangsseite des inneren Rohsegments im Ringspalt ein Verbindungselement fest verbunden ist, dass mit der inneren Umfangsseite des äußeren Rohsegments im Ringspalt ein anderes Verbindungselement fest verbunden ist, dass wenigstens eines der Verbindungselemente durch eine ausgehärtete Vergussmasse gebildet ist und dass wenigstens die beiden Verbindungselemente die Rohrsegmente in einer Längsrichtung der Rohrsegmente formschlüssig und/oder kraftschlüssig verbinden.

Die Erfindung hat mithin erkannt, dass die Verbindung sehr effektiv und zuverlässig vorgefertigt werden kann, indem der Ringspalt zwischen den Rohrsegmenten mit wenigstens einer Vergussmasse ausgegossen wird, welche auf einer Seite der Trennschicht vorgesehen ist. Die Verbindungselemente sind über die wenigstens eine Trennschicht separiert. Besonders zweckmäßig ist es jedoch, wenn der Ringspalt auf beiden Seiten der Trennschicht durch eine Vergussmasse ausgegossen wird. Die Vergussmasse ist dann über wenigstens eine Trennschicht in wenigstens zwei separate Bereiche unterteilt, so dass jeder Teil der Vergussmasse beim Aushärten im Ringspalt ein unterschiedliches Verbindungselement bildet, wobei die Verbindungselemente anschließend entlang der Trennschicht getrennt werden können. Wenn nur ein Verbindungselement aus einer Vergussmasse gebildet wird, wird dieses Verbindungselement von einem andersartigen, weiteren Verbindungselement durch die Trennschicht getrennt.

Die vorgefertigte Verbindung kann dann vor Ort sehr einfach gefügt werden, und zwar indem die beiden Rohrsegmente am Ort der Installation einfach wieder ineinander gesteckt werden. Dabei bilden dann die Verbindungselemente einen Formschluss und/oder Kraftschluss in einer Längsrichtung der Rohrsegmente aus. Die beiden Verbindungselemente sind durch das vorherige, wenigstens teilweise Ausgießen des Ringspalts fest mit dem jeweils zugehörigen Rohrsegment verbunden. Die Rohrsegmente sind mithin unverlierbar mit den Verbindungselementen verbunden. Auch wenn die Verbindungselemente und die Rohrsegmente aus unterschiedlichen Materialien gebildet werden, so sind die Verbindungselemente und die Rohrsegmente doch vorzugsweise wenigstens im Wesentlichen stoffschlüssig verbunden oder fest miteinander verklebt.

Zum Vorfertigen der Verbindung werden die beiden Rohrsegmente mit den einander zugeordneten Enden übereinander gesteckt, und zwar so, dass sich ein Ringspalt zwischen den Rohrsegmenten bildet. In diesem Ringspalt wird wenigstens eine Trennschicht vorgesehen, die sich in Längsrichtung und/oder in radialer Richtung erstreckt und so den Ringspalt in wenigstens zwei unterschiedliche Abschnitte auf unterschiedlichen Seiten der wenigstens einen Trennschicht unterteilt. Von diesen zwei unterschiedlichen Bereichen wird dann wenigstens ein Bereich wenigstens teilweise mit einer Vergussmasse ausgefüllt. Bevorzugt werden jedoch die wenigstens zwei unterschiedlichen Bereiche jeweils mit einer Vergussmasse ausgefüllt, die sodann im Ringspalt aushärtet. Dabei bildet die Vergussmasse wenigstens ein separates Verbindungselement oder bevorzugt wenigstens zwei separate Verbindungselemente. Die Verbindungselemente auf beiden Seiten der Trennschicht sind voneinander durch die Trennschicht getrennt aber jeweils fest mit dem jeweils zugeordneten Rohrsegment verbunden. Infolge der Trennschicht können die Rohrsegmente nach dem Aushärten der wenigstens einen Vergussmasse wieder gegeneinander ausgezogen werden, wobei die wenigstens zwei Verbindungselemente dann entlang der wenigstens einen Trennschicht wieder voneinander getrennt werden können. Später können die entsprechenden Rohrsegmente dann wieder ineinandergesteckt werden, um eine formschlüssige und/oder kraftschlüssige Verbindung zu erzeugen.

Grundsätzlich können mehrere Trennschichten im Ringspalt vorgesehen werden, die dann bedarfsweise zu mehr als zwei separaten Bereichen zum Aushärten der Vergussmasse und/oder zu mehr als zwei unterschiedlichen Verbindungselementen führen. Da die Verbindung und deren Herstellung jedoch möglichst einfach und kostengünstig gestaltet werden soll, wird hiervon vermutlich nur in ganz besonderen Fällen Gebrauch gemacht werden. Dagegen wird es besonders bevorzugt sein, wenn die wenigstens eine Trennschicht umlaufend im Ringspalt vorgesehen ist. Dies vereinfacht das Verfahren und ermöglicht auf einfache Weise die Ausbildung von wenigstens einem wenigstens im Wesentlichen gleichförmig umlaufenden Verbindungselement.

Vergussmassen die mit den entsprechenden Rohrsegmenten unter Berücksichtigung des Materials der Ringsegmente beim Aushärten eine ausreichend feste Verbindung eingehen, sind dem Fachmann bekannt oder können vom Fachmann durch einfache Versuche ermittelt werden.

Die Vorteile der beschriebenen Verbindung kommen zudem insbesondere bei turmartigen Bauwerken, insbesondere bei Windkraftanlagen, ganz besonders bei Offshore-Windanlagen zum Tragen. Bei derartigen Bauwerken werden Rohrsegmente mit großen Durchmessern eingesetzt und müssen die entsprechenden Verbindungen kostengünstig sein und zudem zuverlässig hohe Lasten aufnehmen können.

Der besseren Verständlichkeit halber und zur Vermeidung unnötiger Wiederholungen werden nachfolgend das Verfahren und die Verbindung gemeinsam beschrieben, ohne immer jeweils im Einzelnen zwischen dem Verfahren und der Verbindung zu unterscheiden. Für den Fachmann ergibt sich jedoch anhand des Kontextes, welche Merkmale jeweils in Bezug auf das Verfahren und die Verbindung besonders bevorzugt sind.

Bei einer ersten besonders bevorzugten Ausgestaltung des Verfahrens werden nach dem Trennen der Rohrsegmente entlang der Trennschicht die getrennten Rohrsegmente wieder derart ineinander gesteckt, dass wenigstens die aus der bereits ausgehärteten Vergussmasse gebildeten separaten Verbindungselemente einen Formschluss und/oder Kraftschluss in Längsrichtung der Rohrsegmente bilden. Wenn lediglich ein Verbindungselement durch eine ausgehärtete Vergussmasse gebildet ist, bilden die Verbindungselemente trotzdem einen Formschluss und/oder Kraftschluss in Längsrichtung der Rohrsegmente. Dies kann einfach am Ort der Installation des turmartigen Bauwerks erfolgen, um die beiden Rohrsegmente abschließend und definiert zu fügen. Dabei ist es besonders bevorzugt, wenn wieder dieselben Rohrsegmente ineinandergesteckt werden, die zur Bildung des Ringspalts und zum Aushärten der wenigstens einen Vergussmasse darin ineinandergesteckt gewesen sind. Zudem ist es zweckmäßig, wenn die Rohrsegmente genauso zueinander um die Längsachse gedreht sind, wie beim Aushärten der wenigstens einen Vergussmasse. So wird sichergestellt, dass die korrespondierenden Verbindungselemente auch in höchstem Maße korrespondierend zueinander ausgebildet sind.

Besonders zweckmäßig ist es zur Errichtung eines turmartigen Bauwerks und auch zur Bereitstellung einer entsprechenden Verbindung grundsätzlich, wenn als Rohrsegmente insbesondere Stahlrohrsegmente oder Stahlbetonrohrsegmente verwendet werden. So lassen sich hohe Türme fertigen und in der Verbindung zuverlässig hohe Lasten aufnehmen. Um die Verbindung und die Fertigung der turmartigen Struktur zu vereinfachen, bietet es sich zudem an, wenn als Rohrsegmente wenigstens im Bereich des Ringspalts zylindrische oder konische Rohrsegmente verwendet werden. Dadurch werden auch Kosten gegenüber aufwendigeren Strukturen eingespart. Die Verbindung hat zudem aus den zuvor bereits genannten Gründen besondere Vorteile, wenn als Rohrsegmente Rohrsegmente eines Offshore-Bauwerks verwendet werden und/oder wenn als Rohrsegmente Turmsegmente einer Windkraftanlage, insbesondere einer Offshore-Windkraftanlage, verwendet werden.

Alternativ oder zusätzlich werden das Verfahren und die Verbindung vereinfacht, wenn die Rohrsegmente unter Ausbildung eines Ringspalts zwischen den Rohrsegmenten konzentrisch zueinander positioniert werden. Dies fördert zudem bedarfsweise eine gleichmäße Aufnahme und Ableitung von Kräften aus dem turmartigen Bauwerk.

Um die Rohrsegmente nach dem Aushärten der wenigstens einen Vergussmasse leicht wieder voneinander trennen zu können und ein übermäßiges Anhaften aneinander und/oder an einem weiteren Verbindungselement zu vermeiden, bietet es sich an, als Trennschicht eine Folie, vorzugsweise eine Kunststofffolie, insbesondere eine Folie aus Polyvinylchlorid (PVC) und/oder Polytetrafluorethylen (PTFE), zu verwenden. Besonders einfach und schnell ist die Anordnung der Trennschicht im Ringspalt zu gewährleisten, wenn wenigstens ein Bereich der Trennschicht darin wenigstens abschnittsweise zylindrisch angeordnet wird. Dann kann auch die wenigstens eine Vergussmasse sehr einfach und schnell in den wenigstens einen verbleibenden Freiraum auf einer Seite der Trennschicht oder bevorzugt auf den gegenüberliegenden Seiten der Trennschicht eingebracht werden. Dies gilt insbesondere dann, wenn wenigstens der zylindrische Abschnitt der Trennschicht sich wenigstens im Wesentlichen konzentrisch zum inneren Rohrsegment und/oder zum äußeren Rohrsegment erstreckt. Die auf diese Weise entstehenden Verbindungselemente bilden dann zwar keinen oder nur einen geringen Formschluss. Wenn jedoch expansive Vergussmassen, also nach dem Aushärten noch expandierende Vergussmassen, verwendet werden, kann eine in Längsrichtung der Rohrsegmente kraftschlüssige Verbindung erhalten werden, die hohe Kräfte aufnehmen kann.

Alternativ oder zusätzlich kann die Trennschicht im Ringspalt so vorgesehen werden, dass die im Ringspalt zwischen den beiden Rohrsegmenten vorgesehene Trennschicht bzw. Bereich der Trennschicht, den Ringspalt in Längsrichtung der Rohrsegmente wenigstens im Wesentlichen verschließt. Dann kann auch die wenigstens eine Vergussmasse besonders einfach und schnell in den wenigstens einen Freiraum auf einer Seite der Trennschicht oder bevorzugt in die verbleibenden Freiräume auf den gegenüberliegenden Seiten der Trennschicht eingebracht werden.

Alternativ oder zusätzlich zu einer wenigstens bereichsweise zylindrischen Anordnung der Trennschicht kann die Trennschicht wenigstens abschnittsweise auch konisch und/oder in radialer Richtung schräg zur Längsrichtung der Rohrsegmente ausgebildet werden. Auf diese Weise können einfach konische oder derart geformte Verbindungselemente geschaffen werden, die zu einem ausgeprägten Formschluss zwischen den Rohrsegmenten in einer Längsrichtung der Rohrsegmente führen. Dies gilt in besonderem Maße, wenn die Trennschicht wenigstens im konischen Abschnitt am inneren Rand des Ringspalts in Längsrichtung der Rohrsegmente näher an dem dem Ringspalt zugeordneten Ende des inneren Rohrsegments als am äußeren Rand des Ringspalts und/oder am äußeren Rand des Ringspalts in Längsrichtung der Rohrsegmente näher an dem dem Ringspalt zugeordneten Ende des äußeren Rohrsegments als am inneren Rand des Ringspalts vorgesehen wird. Auf diese Weise kann sichergestellt werden, dass das wenigstens eine Verbindungselement eines oberen und äußeren Rohrsegments das wenigstens eine Verbindungselement des unteren und inneren Rohrsegments nach innen formschlüssig übergreift. Alternativ kann so sichergestellt werden, dass das wenigstens eine Verbindungselement eines oberen und inneren Rohrsegments das wenigstens eine Verbindungselement des unteren und äußeren Rohrsegments nach innen formschlüssig übergreift.

Um einen hohen Kraftschluss der Verbindung zwischen den Rohrsegmenten zu gewährleisten, kann der Ringspalt bei erwärmtem äußeren Rohrsegment und/oder bei gekühltem inneren Rohrsegment wenigstens teilweise mit Vergussmasse ausgegossen und/oder nach dem Aushärten bei erwärmtem äußeren Rohrsegment und/oder bei gekühltem inneren Rohrsegment der Vergussmasse wieder ineinander gesteckt werden. Infolge der thermischen Längenausdehnung werden die Verbindungselemente der Rohrsegmente im verbundenen Zustand gegeneinander gepresst.

Damit die Rohrsegmente nach dem Aushärten der wenigstens einen Vergussmasse leichter wieder voneinander getrennt werden können, kann der Ringspalt bei erwärmtem äußeren Rohrsegment und/oder bei gekühltem inneren Rohrsegment entlang der Trennschicht voneinander getrennt werden. Das Erwärmen bzw. Kühlen des entsprechenden Rohrsegments führt dann infolge der thermischen Längenausdehnung zu einer Spaltbildung zwischen den wenigstens beiden korrespondierenden Verbindungselementen oder unterstützt wenigstens eine entsprechende Spaltbildung.

Besonders zweckmäßig kann es in diesem Zusammenhang sein, wenn das gekühlte äußere Rohrsegment und/oder innere Rohrsegment auf eine Temperatur unter 20 °C, vorzugsweise unter 15 °C, insbesondere unter 10 °C gekühlt wird und/oder wenn das erwärmte äußere Rohrsegment und/oder innere Rohrsegment auf eine Temperatur über 20 °C, vorzugsweise über 30 °C, insbesondere über 40 °C erwärmt wird.

Die Verbindung kann verstärkt und langlebiger ausgestaltet werden, wenn das äußere Rohrsegment und/oder innere Rohrsegment im Bereich des Ringspalts wenigstens eine Schubrippe aufweist. Dabei ist es besonders zweckmäßig und einfach zu realisieren, wenn die wenigstens eine Schubrippe wenigstens im Wesentlichen umlaufend vorgesehen ist. Um hohe Kräfte in vertikaler Richtung aufnehmen und gleichmäßig ableiten zu können, bietet es sich weiter an, wenn die wenigstens eine Schubrippe wenigstens im Wesentlichen ringförmig vorgesehen ist.

Als Vergussmasse kommen unterschiedliche Materialien in Frage. Die Vergussmasse kann zweckmäßiger Weise beispielsweise wenigstens 25 Gew.-% Tricalciumaluminat bzw. 3CaO · SiO2 und/oder Dicalciumsilikat (Belit) bzw. 2 CaO · SiO2 aufweisen. Besonders geeignet ist es unabhängig davon, wenn die Vergussmasse einen Zementgehalt von wenigstens 200 kg pro Kubikmeter (kg/m³) und/oder Alkali-Silica reaktive Zuschläge, etwa in Form von Grauwacke, Flint, Opal und/oder Dolomit und/oder wenigstens einen Gehalt von 2 Gew.-% an Bentonit, etwa in Form von Montmorillonit aufweist. Besonders zuverlässig und langlebig sowie einfach zu verarbeiten sind jedoch auch Vergussmörtel und/oder Grout. Bei Grout handelt es sich beispielsweise um einen hochfesten Vergussbeton, einen hochfesten Vergussmörtel oder um eine Zementsuspension, der bzw. die in unterschiedlichen Zusammensetzungen bekannt sind. Ein Vergussbeton oder Vergussmörtel zeichnet sich durch Beimengungen von Zuschlägen, insbesondere Feinkornzuschlägen wie beispielsweise Kies, Granit, Grauwacke und/oder Flint aus. Die Zementsuspension basiert typischerweise auf mit Wasser angemachtem Portlandzement nach EN 197. Alternativ kommen Spezialmörtel zum Einsatz. Die Würfeldruckfestigkeit beträgt dabei in der Regel mehr als 20 N pro Quadratmillimeter, meist jedoch mehr als 40 N pro Quadratmillimeter (N/mm2).Dabei kann zur Verstärkung des Kraftschlusses bedarfsweise eine während des Aushärtens expandierende Vergussmasse, eine sogenannte expansive Vergussmasse, insbesondere ein während des Aushärtens expansierendes Grout, ein sogenanntes expansives Grout, verwendet werden. Besonders bevorzugt sind dabei ganz grundsätzlich Grouts, die mit Alkali-Silica reaktiven Zuschlägen oder Beimengungen von Bentonit hergestellt werden. Es kommen aber auch Calcium Sulfo Aluminat Zemente oder ein Aluminat in Frage.

Bei einer ersten besonders bevorzugten Ausgestaltung der Verbindung ist zwischen den Verbindungselementen die Trennschicht zur Herstellung der Verbindung vorgesehen. Die Trennschicht muss also nicht entfernt werden, bevor die Verbindung abschließend gefügt wird. Dies kann aber dennoch der Fall sein. Die Trennschicht kann dabei als Dichtmasse und/oder zur gleichmäßen Verteilung der Kräfte über den Umfang der Verbindung dienen. Besonders einfach und zweckmäßig ist die Verwendung wenigstens einer Trennschicht in Form einer Folie, vorzugsweise eine Kunststofffolie, insbesondere eine Folie aus Polyvinylchlorid (PVC) und/oder Polytetrafluorethylen (PTFE). Die Trennschicht kann aber auch wenigstens teilweise durch ein Metall, etwa in Form von Aluminium, Eisen oder Stahl und/oder ein Kohlefasergewebe und/oder ein Glasfasergewebe und/oder ein faserverstärktes Verbundmaterial gebildet werden. In einer weiteren Ausgestaltung kann die zur Herstellung der Verbindung verwendete Trennschicht vor der späteren Installation der Verbindung durch eine Trennschicht ersetzt oder ergänzt werden, die offshore unter dem Witterungseinfluss expandiert. Hierbei kommen insbesondere Trennschichten aus Bentonit, vorzugsweise Bentonitmatten, in Frage.

Alternativ oder zusätzlich können die Verbindungselemente und/oder kann die Trennschicht zwischen den Verbindungselementen im Ringspalt wenigstens abschnittsweise wenigstens im Wesentlichen zylindrisch und/oder wenigstens im Wesentlichen konisch ausgebildet sein. Dies ermöglicht ein einfaches Fügen der Verbindung und zugleich das Bereitstellen einer Verbindung, die hohe Kräfte aufnehmen kann.

Im Übrigen können die Rohrsegmente wenigstens im Bereich des Ringspalts zylindrisch oder konisch ausgebildet sein. Zylindrische Rohrsegmente sind dabei einfach und kostengünstiger bereitzustellen, während konische Rohrsegmente bedarfsweise größere Kräfte übertragen können. Alternativ oder zusätzlich können die Rohrsegmente Rohrsegmente eines Offshore-Bauwerks sein, da dann die Vorteile der Verbindung in besonderem Maße zum Tragen kommen. Entsprechende Offshore-Bauwerke können beispielsweise Öl- oder Gas-Plattformen sein. Besonders zweckmäßig ist es dabei wegen des entsprechenden Kostendrucks und Zeitdrucks, beim Installieren von entsprechenden Turmanlagen, wenn die Rohrsegmente als Turmsegmente oder Fundamentsegmente einer Windkraftanlage, insbesondere einer Offshore-Windkraftanlage, ausgebildet sind.

Nachfolgend wird die Erfindung anhand einer lediglich Ausführungsbeispiele darstellenden Zeichnung näher erläutert. In der Zeichnung zeigt
- Fig. 1: eine Offshore-Windkraftanlage in einer schematischen Seitenansicht,
- Fig. 2A-F: Verfahrensschritte eines ersten erfindungsgemäßen Verfahrens zur Bildung einer ersten erfindungsgemäßen Verbindung in schematischen Schnittansichten und
- Fig. 3A-F: Verfahrensschritte eines ersten erfindungsgemäßen Verfahrens zur Bildung einer ersten erfindungsgemäßen Verbindung in schematischen Schnittansichten

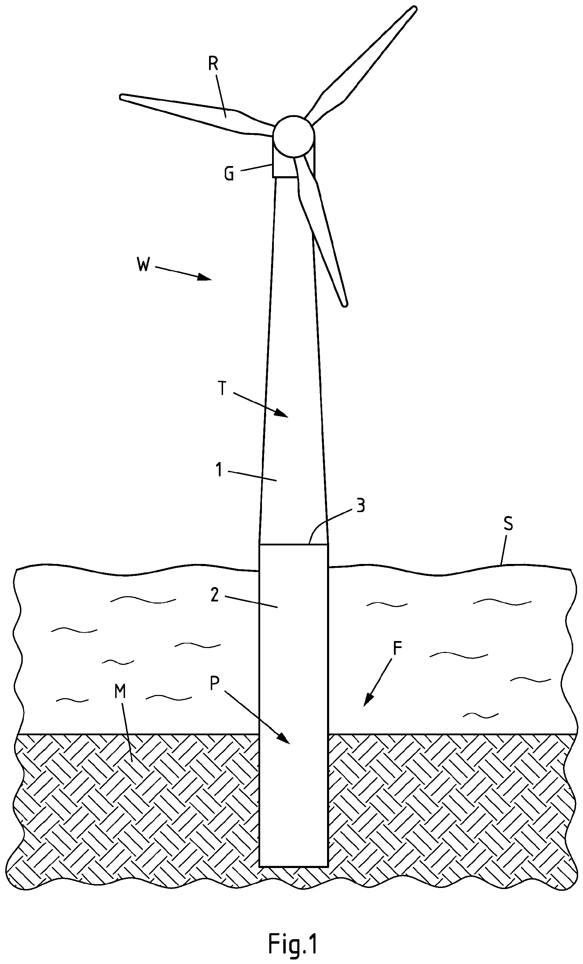

In der Fig. 1 ist eine Offshore-Windkraftanlage W dargestellt. Die Windkraftanlage W umfasst ein Monopile-Fundament F, das von einem Gründungspfahl P in Form eines Metallrohrs gebildet wird, welcher in den Meeresboden M eingelassen ist. Der Gründungspfahl P ragt bis über den Meeresspiegel S hinaus nach oben und ist dort über eine Verbindung mit dem Turm T der Windkraftanlage W verbunden, die die Gondel G und den Rotor O der Windkraftanlage W trägt. Bei der vorliegenden Windkraftanlage W ist der untere Teil des Turms T als zylindrisches Rohrsegment 1 und der obere Teil des Gründungspfahls P als zylindrisches Rohrsegment 2 ausgebildet. Beide Rohrsegmente 1,2 sind als Stahlrohre ausgebildet. Zudem ist der Durchmesser des oberen Rohrsegments 1 größer als der Durchmesser des unteren Rohrsegments 2, so dass das obere Rohrsegment 1 mit seinem unteren Ende auf das untere Rohrsegment 2 mit seinem oberen Ende aufgeschoben werden kann.

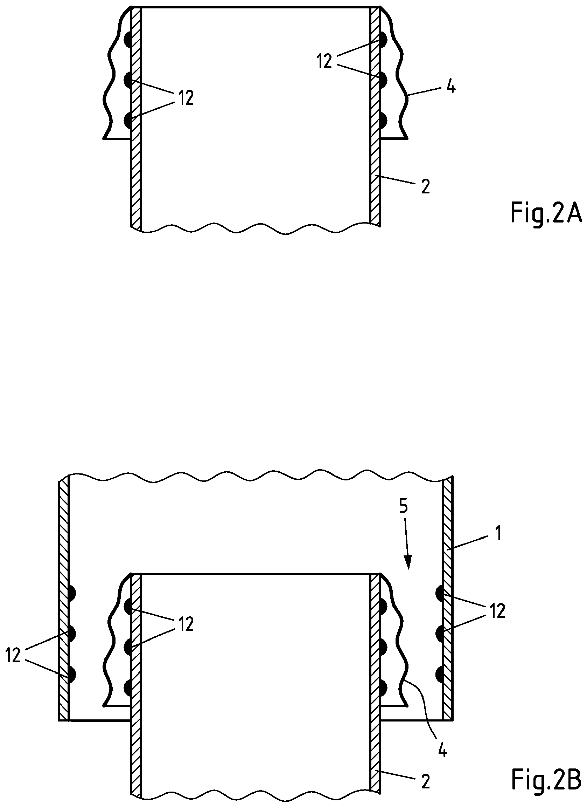

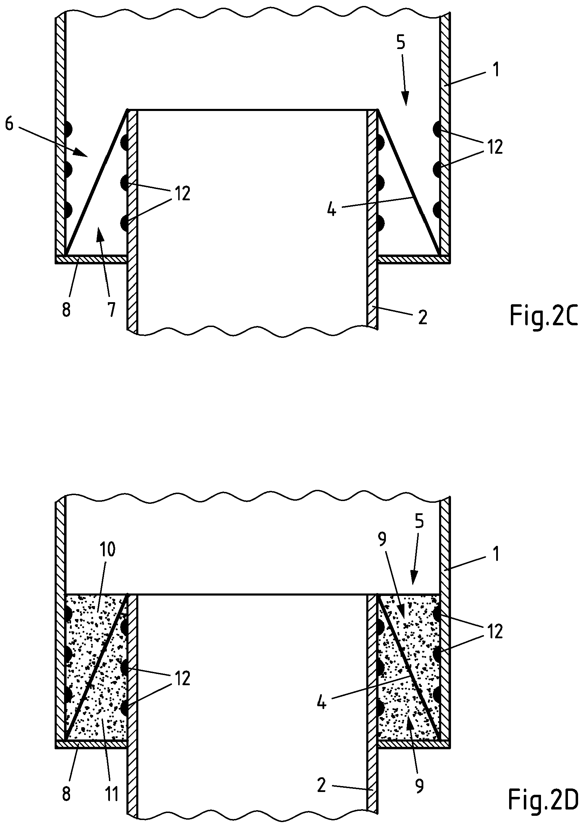

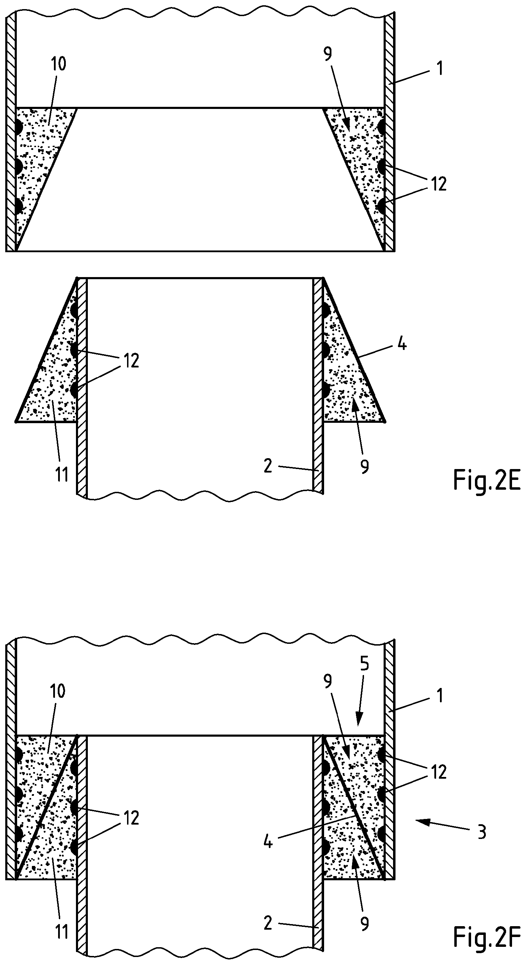

In den Fig. 2A-F ist schrittweise dargestellt, wie die Verbindung 3 zwischen den beiden Rohrsegmenten 1,2 gebildet wird. An dem Ende des schmaleren Rohrsegments 2 wird zunächst eine sich in der Längsrichtung L erstreckende Trennschicht 4 in Form einer Kunststofffolie angebracht, wie dies in der Fig. 2A dargestellt ist. Nun werden die einander zugeordneten Enden der beiden Rohrsegmente 1,2 abschnittsweise in der Längsrichtung L der Rohrsegmente 1,2 aufeinander geschoben, wie dies in der Fig. 2B dargestellt ist. Es handelt sich hier um konzentrische Rohrsegmente 1,2 mit kreisrundem Querschnitt. Auf diese Weise wird ein Ringspalt 5 in radialer Richtung R gebildet. Im nächsten Schritt wird die Trennschicht 4 mit dem Ende des anderen Rohrsegments 1 verbunden, und zwar so, dass die Trennschicht 4 wenigstens abschnittsweise eine konische Gestalt annimmt, wie dies in der Fig. 2C dargestellt ist. Auf diese Weise trennt die Trennschicht 4 zwei Bereiche 6,7 des Ringspalts 5 gegeneinander ab. Der nach unten offene Bereich 6 wird durch einen Ring 8 oder eine Dichtung, wie beispielsweise eine sogenannte Groutdichtung, verschlossen und die beiden Bereiche 6,7 werden angrenzend zu der Trennschicht 4 und zu beiden Seiten der Trennschicht 4 wenigstens teilweise mit einer Vergussmasse 9 ausgegossen, die sodann im Ringspalt 5 aushärtet, wobei die Vergussmasse 9 zwei separate Verbindungselemente 10,11 bildet, die fest mit dem jeweils zugeordneten Rohrsegment 1,2 verbunden sind, wie dies in der Fig. 2D dargestellt ist. Um diese Verbindung 3 zu stärken sind an der Außenseite des schmaleren, inneren Rohrsegments 2 und an der Innenseite des weiteren, äußeren Rohrsegments 1 jeweils mehrere Schubrippen 12 vorgesehen, die kreisförmig um die Innenseite bzw. die Außenseite des jeweiligen Rohrsegments 1,2 umlaufen. Die Rohrsegmente 1,2 und zugehörigen Verbindungselemente 10,11 lassen sich aber wieder entlang der Trennschicht 4 voneinander trennen, indem die Rohrsegmente 1,2 in Längsrichtung L derselben wieder gegeneinander ausgezogen werden, wie dies in der Fig. 2E dargestellt ist.

Nun lassen sich die Rohrsegmente 1,2 getrennt voneinander an den Aufstellort der Offshore-Windkraftanlage W verbringen und dort wieder wie zuvor ineinanderstecken, um so eine Verbindung 3 der Offshore-Windkraftanlage W zu fügen, wie dies in der Fig. 2F dargestellt ist. Da dazu dieselben Rohrsegmente 1,2 verwendet werden wie zum Bilden der Verbindungselemente 10,11 aus der Vergussmasse 9 und die Rohrsegmente 1,2 auch wieder genauso gegeneinander gedreht werden wie zum Bilden der Verbindungselemente 10,11 aus der Vergussmasse 9, wird eine definiert und sehr präzise Verbindung 3 erhalten. Über die beiden Verbindungselemente 10,11 werden die beiden Rohrsegmente 1,2 in der Längsrichtung L der Rohrsegmente 1,2 formschlüssig gehalten. Ein Verdrehen wird infolge des Eigengewichts des oberen Rohrsegments 1,2 durch einen Kraftschluss der Verbindung 3 vermieden.

Die Ausrichtung der zu verbindenden Rohrsegmente 1,2 kann dabei auch umgekehrt werden. Wenn das schmalere Rohrsegment 2 das obere Rohrsegment und das weitere Rohrsegment 1 das untere Rohrsegment sein soll, kann die Verbindung 3 auf dieselbe Weise hergestellt werden. Nur beim endgültigen Fügen der Verbindung 3 muss die Anordnung der Rohrsegmente 1,2 in der Längsrichtung L zueinander umgekehrt werden. Alternativ oder zusätzlich kann auch die Ausrichtung der zu verbindenden Rohrsegmente 1,2 vor dem Einbringen der Trennschicht 4 und/oder der wenigstens einen Vergussmasse 9 umgekehrt werden. Es wäre also möglich das schmalere Rohrsegment 2 von oben in das weitere Rohrsegment 1 einzustecken.

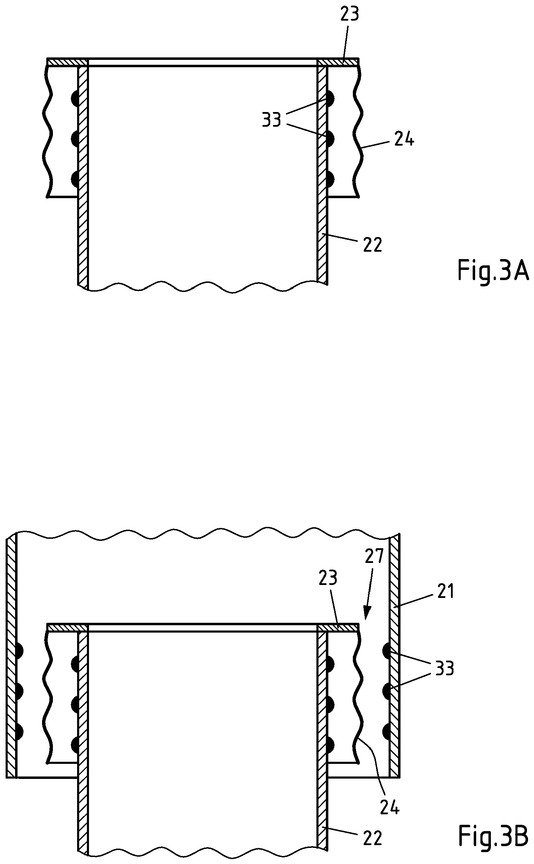

In den Fig. 3A-F ist schrittweise dargestellt, wie eine alternative Verbindung 20 zwischen zwei Rohrsegmenten 21,22 unterschiedlicher Weite gebildet wird. An dem Ende des schmaleren Rohrs 22 wird zunächst ein Ring 23 lösbar befestigt, der umlaufend eine sich in der Längsrichtung L erstreckende Trennschicht 24 in Form einer Kunststofffolie hält, wie dies in der Fig. 3A dargestellt ist. Weiter unten ist ein weiterer Ring 25 an der Kunststofffolie gehalten. Nun werden die einander zugeordneten Enden der beiden Rohrsegmente 21,22 abschnittsweise in der Längsrichtung L der Rohrsegmente 21,22 aufeinander geschoben, wie dies in der Fig. 3B dargestellt ist. Es handelt sich hier um konzentrische Rohrsegmente 21,22 mit kreisrundem Querschnitt.

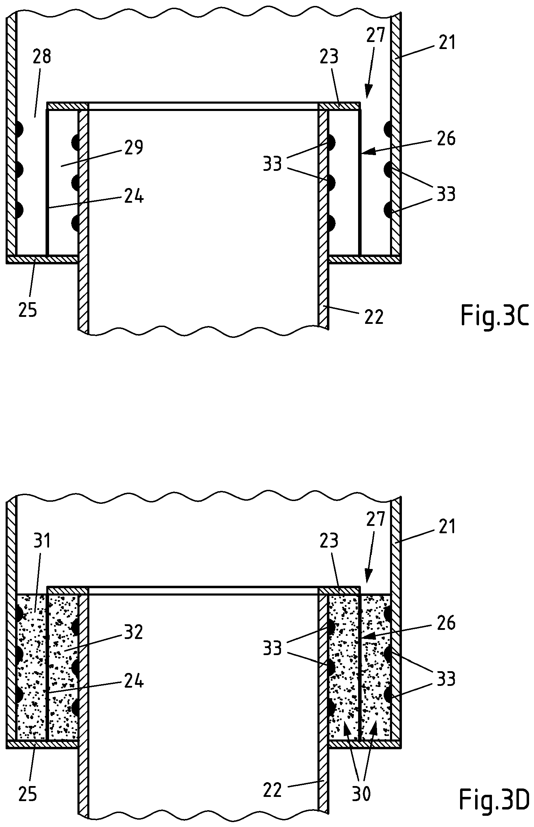

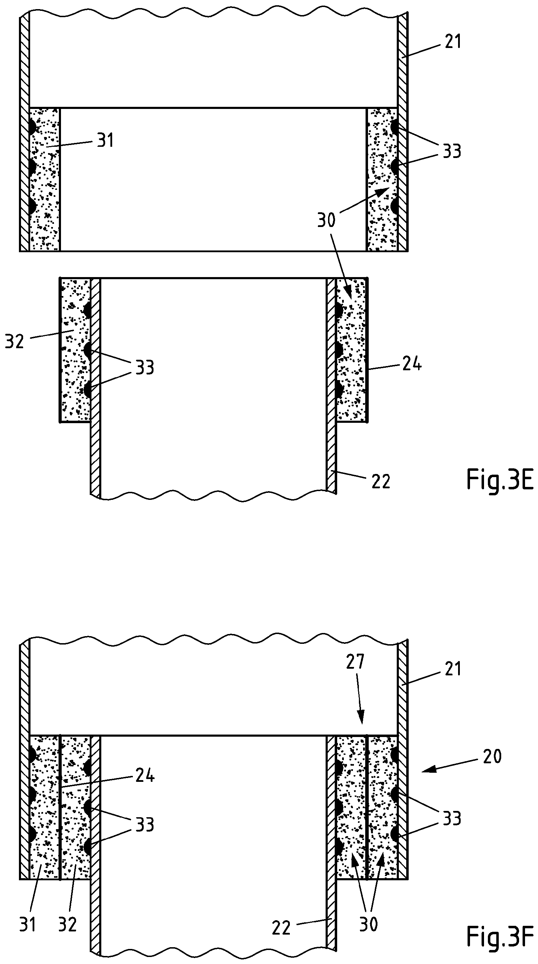

Auf diese Weise wird ein Ringspalt in radialer Richtung R gebildet, wie dies in der Fig. 3C dargestellt ist. Die Trennschicht 24 bildet einen zylindrischen Abschnitt 26 im Ringspalt 27, wobei die beiden Ringe 23,25 dafür Sorge tragen, dass die Trennschicht 24 im zylindrischen Abschnitt 26 zu beiden Rohrsegmenten 21,22 beabstandet ist. Außerdem verschließen die Ringe 23,25 den Ringspalt 27 nach oben und unten, so dass die Bereiche 28,29 zu beiden Seiten der Trennschicht 24 abgeschlossen sind und mit Vergussmasse 30 ausgefüllt werden können, die sodann im Ringspalt 27 aushärtet, wobei die Vergussmasse 30 zwei separate Verbindungselemente 31,32 bildet, die fest mit dem jeweils zugeordneten Rohrsegment 21,22 verbunden ist, wie dies in der Fig. 3D dargestellt ist. Um diese Verbindung 20 zu stärken, sind an der Außenseite des schmaleren, inneren Rohrsegments 22 und an der Innenseite des weiteren, äußeren Rohrsegments 21 jeweils mehrere Schubrippen 33 vorgesehen, die kreisförmig um die Innenseite bzw. die Außenseite des jeweiligen Rohsegments 21,22 umlaufen. Die Rohrsegmente 21,22 und zugehörigen Verbindungselemente 31,32 lassen sich aber wieder entlang der Trennschicht 24 voneinander trennen, indem die Rohrsegmente 21,22 in Längsrichtung L derselben wieder gegeneinander ausgezogen werden, wie dies in der Fig. 3E dargestellt ist.

Nun lassen sich die Rohrsegmente 21,22 getrennt voneinander an den Aufstellort der Offshore-Windkraftanlage W verbringen und dort wieder wie zuvor ineinanderstecken, um so eine Verbindung 20 der Offshore-Windkraftanlage W zu fügen, wie dies in der Fig. 3F dargestellt ist. Da dazu dieselben Rohrsegmente 21,22 verwendet werden wie zum Bilden der Verbindungselemente 31,32 aus der Vergussmasse 30 und die Rohrsegmente 21,22 auch wieder genauso gegeneinander gedreht werden wie zum Bilden der Verbindungselemente 31,32 aus der Vergussmasse 30 wird eine definiert und sehr präzise Verbindung 20 erhalten. In der Längsrichtung L werden die Rohrsegmente 21,22 gegeneinander insbesondere infolge eines Kraftschlusses gehalten. Dieser wird durch die expansive Vergussmasse 30 bewirkt. Die Vergussmasse 30 expandiert noch eine gewisse Zeit nach dem prinzipiellen Aushärten. Mithin expandieren die Verbindungselemente 31,32 noch nach dem Fügen der Verbindung 20. Die korrespondierenden Verbindungselemente 31,32 werden infolge der Expansion im gefügten Zustand zunehmend gegeneinander gepresst, was einen hohen Kraftschluss nach sich zieht.

Ob bei der Herstellung der Verbindung und/oder bei der späteren Installation der Rohrsegmente 1,2 das schmalere Rohrsegment 2 von oben in das weitere Rohrsegment 1 eingesteckt wird oder umgekehrt, ist grundsätzlich von untergeordneter Bedeutung.

### Bezugszeichenliste

- 1,2: Rohrsegment
- 3: Verbindung
- 4: Trennschicht
- 5: Ringspalt
- 6,7: Bereiche
- 8: Ring
- 9: Vergussmasse
- 10,11: Verbindungselement
- 12: Schubrippen
- 20: Verbindung
- 21,22: Rohrsegmenten
- 23: Ring
- 24: Trennschicht
- 25: Ring
- 26: zylindrischer Abschnitt
- 27: Ringspalt
- 28,29: Bereich
- 30: Vergussmasse
- 31,32: Verbindungselement
- 33: Schubrippen
- F: Fundament
- G: Gondel
- L: Längsrichtung
- M: Meeresboden
- O: Rotor
- P: Gründungspfahl
- R: radiale Richtung
- S: Meeresspiegel
- T: Turm
- W: Windkraftanlage

## Patentansprüche

1. Verfahren zur Bildung einer Verbindung (3,20) zwischen zwei Rohrsegmenten (1,2,21,22) unterschiedlicher Weite, vorzugsweise eines turmartigen Bauwerks, insbesondere einer Windkraftanlage,
- bei dem das weitere Rohrsegment (1,31) mit einem Ende teilweise über ein Ende des schmaleren Rohrsegments (2,32) geschoben wird,
- bei dem die Rohrsegmente (1,2,21,22) unter Ausbildung eines Ringspalts (5,27) zwischen den Rohrsegmenten (1,2,21,22) voneinander beabstandet positioniert werden,
- bei dem im Ringspalt (5,27) zwischen den beiden Rohrsegmenten (1,2,21,22) eine sich in Längsrichtung (L) der Rohrsegmente (1,2,21,22) und/oder in radialer Richtung (R) erstreckende Trennschicht (4,14) vorgesehen wird,
- bei dem der Ringspalt (5,27) angrenzend zu der Trennschicht (4,14) und zu wenigstens einer Seite der Trennschicht (4,14) wenigstens teilweise mit einer Vergussmasse (9,30) ausgegossen wird,
- bei dem beim Aushärten der Vergussmasse (9,30) die Vergussmasse (9,30) auf einer Seite der Trennschicht (4,14) nur mit einem der Rohrsegmente (1,2,21,22) und/oder die Vergussmasse (9,30) auf der anderen Seite der Vergussmasse (9,30) nur mit dem anderen Rohrsegment (1,2,21,22) eine feste Verbindung (3,20) eingeht und
- bei dem die Rohrsegmente (1,2,21,22) nach dem Aushärten der Vergussmasse (9,30) mit den zugehörigen, insbesondere durch die ausgehärtete Vergussmasse (9,30) gebildeten, separaten Verbindungselementen (10,11,21,22) wieder entlang der Trennschicht (4,14) voneinander getrennt werden.

2. Verfahren nach Anspruch 1,
bei dem nach dem Trennen der Rohrsegmente (1,2,21,22) entlang der Trennschicht (4,14) die getrennten Rohrsegmente (1,2,21,22) wieder derart ineinandergesteckt werden, dass wenigstens die aus der bereits ausgehärteten Vergussmasse (9,30) gebildeten separaten Verbindungselemente (10,11,31,32) einen Formschluss und/oder Kraftschluss in Längsrichtung (L) der Rohrsegmente (1,2,21,22) bilden.

3. Verfahren nach Anspruch 1 oder 2,
- bei dem als Rohrsegmente (1,2,21,22) Stahlrohrsegmente oder Stahlbeton verwendet werden und/oder
- bei dem als Rohrsegmente (1,2,21,22) wenigstens im Bereich des Ringspalts (5,27) zylindrische oder konische Rohrsegmente (1,2,21,22) verwendet werden und/oder
- bei dem als Rohrsegmente (1,2,21,22) Rohrsegmente (1,2,21,22) eines Offshore-Bauwerks verwendet werden und/oder
- bei dem als Rohrsegmente (1,2,21,22) Turmsegmente einer Windkraftanlage (W), insbesondere einer Offshore-Windkraftanlage, verwendet werden und/oder
- bei dem die Rohrsegmente (1,2,21,22) unter Ausbildung eines Ringspalts (5,27) zwischen den Rohrsegmenten (1,2,21,22) konzentrisch zueinander positioniert werden.

4. Verfahren nach einem der Ansprüche 1 bis 3,
- bei dem als Trennschicht (4,14) eine Folie, vorzugsweise eine Kunststofffolie, insbesondere eine Folie aus Polyvinylchlorid (PVC) und/oder Polytetrafluorethylen (PTFE), verwendet wird und/oder
- bei dem die Trennschicht (4,14) wenigstens teilweise durch ein Metall, etwa in Form von Aluminium, Eisen oder Stahl, und/oder ein Kohlefasergewebe und/oder ein Glasfasergewebe und/oder ein faserverstärktes Verbundmaterial gebildet wird und/oder
- bei dem die Trennschicht (4,14) nach der Herstellung des wenigstens einen Verbindungselements (10,11,31,32) durch eine expandierende Trennschicht, insbesondere aus Bentonitmatten, ersetzt oder ergänzt wird.

5. Verfahren nach einem der Ansprüche 1 bis 4,
- bei dem die Trennschicht (4,14) im Ringspalt (5,27) wenigstens abschnittsweise zylindrisch angeordnet wird und
- bei dem, vorzugsweise, wenigstens der zylindrische Abschnitt der Trennschicht (4,14) sich wenigstens im Wesentlichen konzentrisch zum inneren Rohrsegment (2,32) und/oder zum äußeren Rohrsegment (1,31) erstreckt.

6. Verfahren nach einem der Ansprüche 1 bis 5,
- bei dem im Ringspalt (5,27) zwischen den beiden Rohrsegmenten (1,2,21,22) eine den Ringspalt (5,27) in Längsrichtung (L) der Rohrsegmente (1,2,21,22) wenigstens im Wesentlichen verschließende Trennschicht (4,14) vorgesehen wird.

7. Verfahren nach einem der Ansprüche 1 bis 6,
- bei dem die Trennschicht (4,14) wenigstens abschnittsweise konisch und/oder in radialer Richtung (R) schräg zur Längsrichtung (L) der Rohrsegmente (1,2,21,22) ausgebildet wird und
- bei dem, vorzugsweise, die Trennschicht (4) wenigstens im konischen Abschnitt am inneren Rand des Ringspalts (5) in Längsrichtung (L) der Rohrsegmente (1,2) näher an dem dem Ringspalt (5) zugeordneten Ende des inneren Rohrsegments (1,2) als am äußeren Rand des Ringspalts (5) und/oder am äußeren Rand des Ringspalts (5) in Längsrichtung (L) der Rohrsegmente (1,2) näher an dem dem Ringspalt (5) zugeordneten Ende des äußeren Rohrsegments (1,2) als am inneren Rand des Ringspalts (5) vorgesehen wird.

8. Verfahren nach einem der Ansprüche 1 bis 7,
- bei dem der Ringspalt (5,27) bei erwärmtem äußeren Rohrsegment (1,21) und/oder bei gekühltem inneren Rohrsegment (2,32) wenigstens teilweise mit Vergussmasse (9,30) ausgegossen und/oder nach dem Aushärten der Vergussmasse (9,30) wieder ineinander gesteckt werden und/oder
- bei dem die ausgehärteten Verbindungselemente (10,11,31,32) bei erwärmtem äußeren Rohrsegment (1,21) und/oder bei gekühltem inneren Rohrsegment (2,22) entlang der Trennschicht (4,14) voneinander getrennt werden.

9. Verfahren nach Anspruch 8,
- bei dem das gekühlte äußere Rohrsegment (1,21) und/oder innere Rohrsegment (2,22) auf eine Temperatur unter 20 °C, vorzugsweise unter 15 °C, insbesondere unter 10 °C gekühlt wird und/oder
- bei dem das erwärmte äußere Rohrsegment (1, 21) und/oder innere Rohrsegment (2,22) auf eine Temperatur über 20 °C, vorzugsweise über 30 °C, insbesondere über 40 °C erwärmt wird.

10. Verfahren nach einem der Ansprüche 1 bis 9,
- bei dem das äußere Rohrsegment (1,21) und/oder innere Rohrsegment (2,22) im Bereich des Ringspalts (5,27) wenigstens eine Schubrippe (12,33) aufweist und
- bei dem, vorzugsweise, die wenigstens eine Schubrippe (12,33) wenigstens im Wesentlichen umlaufend vorgesehen ist und
- bei dem, weiter vorzugsweise, die wenigstens eine Schubrippe (12,33) wenigstens im Wesentlichen ringförmig vorgesehen ist.

11. Verfahren nach einem der Ansprüche 1 bis 10,
- bei dem als Vergussmasse (9,30) ein Vergussmörtel und/oder ein Grout verwendet wird und
- bei dem, vorzugsweise, ein während des Aushärtens expansierendes Grout, ein sogenanntes expansives Grout, verwendet wird und
- bei dem, weiter vorzugsweise, ein Grout mit Alkali-Silica reaktiven Zuschlägen, Beimengungen von Bentonit, Calcium Sulfo Aluminat Zementen und/oder Aluminat verwendet wird.

12. Verbindung (3,20) von zwei Rohrsegmenten (1,2,21,22) unterschiedlicher Weite, vorzugsweise eines turmartigen Bauwerks, insbesondere einer Windkraftanlage (W), mit einem Ringspalt (5,27) zwischen sich überlappenden Enden eines weiteren, äußeren Rohrsegments (1, 21) und eines schmaleren, inneren Rohrsegments (2,22) unter Anwendung des Verfahrens nach Anspruch 2 und, bedarfsweise, einem der Ansprüche 3 bis 11,
**dadurch gekennzeichnet, dass** mit der äußeren Umfangsseite des inneren Rohsegments (1, 31) im Ringspalt (5,27) ein Verbindungselement (11,32) fest verbunden ist, dass mit der inneren Umfangsseite des äußeren Rohrsegments (2,22) im Ringspalt (5,27) ein anderes Verbindungselement (10, 31) fest verbunden ist, dass wenigstens eines der Verbindungselemente (10,11,31,32) durch eine ausgehärtete Vergussmasse (9,30) gebildet ist und dass wenigstens die beiden Verbindungselemente (10,11,31,32) die Rohrsegmente (1,2,21,22) in einer Längsrichtung (L) der Rohrsegmente (1,2,21,22) formschlüssig und/oder kraftschlüssig verbinden.

13. Verbindung nach Anspruch 12,
**dadurch gekennzeichnet, dass** zwischen den Verbindungselementen (10,11,31,32) die Trennschicht (4,14) zur Herstellung der Verbindung (3,20) vorgesehen ist und dass, vorzugsweise, die Trennschicht (4,14) eine Folie, vorzugsweise eine Kunststofffolie, insbesondere eine Folie aus Polyvinylchlorid (PVC) und/oder Polytetrafluorethylen (PTFE) ist.

14. Verbindung nach Anspruch 12 oder 13,
**dadurch gekennzeichnet, dass** die Verbindungselemente (10,11,31,32) im Ringspalt (5,27) wenigstens abschnittsweise wenigstens im Wesentlichen zylindrisch und/oder wenigstens im Wesentlichen konisch ausgebildet sind.

15. Verbindung nach einem der Ansprüche 12 bis 14,
**dadurch gekennzeichnet, dass** die Rohrsegmente (1,2,21,22) wenigstens im Bereich des Ringspalts (5,27) zylindrisch oder konisch ausgebildet sind und/oder dass die Rohrsegmente (1,2,21,22) Rohrsegmente (1,2,21,22) eines Offshore-Bauwerks sind und/oder dass die Rohrsegmente (1,2,21,22) Turmsegmente einer Windkraftanlage (W), insbesondere einer Offshore-Windkraftanlage, sind.

## Claims

1. Method for forming a connection (3, 20) between two pipe segments (1, 2, 21, 22) of different widths, preferably a tower-like structure, in particular a wind turbine,
- in which the wider pipe segment (1, 31) is pushed with one end partially over an end of the narrower pipe segment (2, 32),
- in which the pipe segments (1, 2, 21, 22) are positioned spaced apart from one another, forming an annular gap (5, 27) between the pipe segments (1, 2, 21, 22),
- in which a separating layer (4, 14) extending in the longitudinal direction (L) of the pipe segments (1, 2, 21, 22) and/or in the radial direction (R) is provided in the annular gap (5, 27) between the two pipe segments (1, 2, 21, 22),
- in which the annular gap (5, 27) is cast at least partially with a casting compound (9, 30) adjacent to the separating layer (4, 14) and to at least one side of the separating layer (4, 14),
- in which, when the casting compound (9, 30) hardens, the casting compound (9, 30) on one side of the separating layer (4, 14) forms a firm connection (3, 20) only with one of the pipe segments (1, 2, 21, 22) and/or the casting compound (9, 30) on the other side of the casting compound (9, 30) forms a firm connection (3, 20) only with the other pipe segment (1, 2, 21, 22), and
- in which the pipe segments (1, 2, 21, 22) are separated from one another again along the separating layer (4, 14) after the casting compound (9, 30) has hardened with the associated separate connecting elements (10, 11, 21, 22) formed in particular by the hardened casting compound (9, 30).

2. Method according to claim 1, in which, after separating the pipe segments (1, 2, 21, 22) along the separating layer (4, 14), the separated pipe segments (1, 2, 21, 22) are reinserted into one another in such manner that at least the separate connecting elements (10, 11, 31, 32) formed from the already hardened casting compound (9, 30) form a form-fitting connection and/or a force-fitting connection in the longitudinal direction (L) of the pipe segments (1, 2, 21, 22).

3. Method according to claim 1 or 2,
- in which steel pipe segments or reinforced concrete are used as pipe segments (1, 2, 21, 22) and/or
- in which cylindrical or conical pipe segments (1, 2, 21, 22) are used as pipe segments (1, 2, 21, 22) at least in the region of the annular gap (5, 27) and/or
- in which pipe segments (1, 2, 21, 22) of an offshore structure are used as pipe segments (1, 2, 21, 22) and/or
in which tower segments of a wind turbine (W), in particular an offshore wind turbine, are used as pipe segments (1, 2, 21, 22) and/or
- in which the pipe segments (1, 2, 21, 22) are positioned concentrically to one another, forming an annular gap (5, 27) between the pipe segments (1, 2, 21, 22).

4. Method according to any one of claims 1 to 3,
- in which a film, preferably a plastic film, in particular a film made of polyvinyl chloride (PVC) and/or polytetrafluorethylene (PTFE), is used as the separating layer (4, 14) and/or
- in which the separating layer (4, 14) is formed at least partially by a metal, for example in the form of aluminium, iron or steel, and/or a carbon fibre fabric and/or a glass fibre fabric and/or a fibre-reinforced composite material and/or
- in which the separating layer (4, 14) is replaced or supplemented by an expanding separating layer, in particular made of bentonite mats, after manufacturing the at least one connecting element (10, 11, 31, 32).

5. Method according to any one of claims 1 to 4,
- in which the separating layer (4, 14) is arranged at least in sections cylindrically in the annular gap (5, 27) and
- in which, preferably, at least the cylindrical section of the separating layer (4, 14) extends at least substantially concentrically to the inner pipe segment (2, 32) and/or to the outer pipe segment (1, 31).

6. Method according to any one of claims 1 to 5,
- in which a separating layer (4, 14) at least substantially sealing the annular gap (5, 27) in the longitudinal direction (L) of the pipe segments (1, 2, 21, 22) is provided in the annular gap (5, 27) between the two pipe segments (1, 2, 21, 22).

7. Method according to any one of claims 1 to 6,
- in which the separating layer (4, 14) is formed at least in sections conically and/or in a radial direction (R) at an angle to the longitudinal direction (L) of the pipe segments (1, 2, 21, 22) and
- in which, preferably, the separating layer (4) is provided at least in the conical section at the inner edge of the annular gap (5) in the longitudinal direction (L) of the pipe segments (1, 2) closer to the end of the inner pipe segment (1, 2) assigned to the annular gap (5) than to the outer edge of the annular gap (5) and/or at the outer edge of the annular gap (5) in the longitudinal direction (L) of the pipe segments (1, 2) closer to the end of the outer pipe segment (1, 2) assigned to the annular gap (5) than to the inner edge of the annular gap (5).

8. Method according to any one of claims 1 to 7,
- in which the annular gap (5, 27) is at least partially cast with casting compound (9, 30) when the outer pipe segment (1, 21) is heated and/or when the inner pipe segment (2, 32) is cooled and/or are reinserted into one another after the casting compound (9, 30) has hardened and/or
- in which the hardened connecting elements (10, 11, 31, 32) are separated from one another along the separating layer (4, 14) when the outer pipe segment (1, 21) is heated and/or when the inner pipe segment (2, 22) is cooled.

9. Method according to claim 8,
- in which the cooled outer pipe segment (1, 21) and/or inner pipe segment (2, 22) is cooled to a temperature below 20°C, preferably below 15°C, in particular below 10°C and/or
- in which the heated outer pipe segment (1, 21) and/or inner pipe segment (2, 22) is heated to a temperature above 20°C, preferably above 30°C, in particular above 40°C.

10. Method according to any one of claims 1 to 9,
- in which the outer pipe segment (1, 21) and/or inner pipe segment (2, 22) has at least one thrust rib (12, 33) in the region of the annular gap (5, 27) and
- in which, preferably, the at least one thrust rib (12, 33) is provided so as to be at least substantially circumferential and
- in which, further preferably, the at least one thrust rib (12, 33) is provided so as to be at least substantially annular.

11. Method according to any one of claims 1 to 10,
- in which a casting mortar and/or a grout is used as the casting compound (9, 30) and
- in which, preferably, a grout expanding during the hardening, a so-called expansive grout, is used and
- in which, further preferably, a grout with alkali silica reactive additives, admixtures of bentonite, calcium sulfoaluminate cements and/or aluminate is used.

12. Connection (3, 20) of two pipe segments (1, 2, 21, 22) of different widths, preferably of a tower-like structure, in particular a wind turbine (W), with an annular gap (5, 27) between overlapping ends of a wider outer pipe segment (1, 21) and a narrower inner pipe segment (2, 22) using the method according to claim 2 and, if necessary, according to any one of claims 3 to 11, **characterised in that** a connecting element (11, 32) is firmly connected to the outer circumferential side of the inner pipe segment (1, 31) in the annular gap (5, 27), **in that** a different connecting element (10, 31) is firmly connected to the inner circumferential side of the outer pipe segment (2, 22) in the annular gap (5, 27), **in that** at least one of the connecting elements (10, 11, 31, 32) is formed by a hardened casting compound (9, 30) and **in that** at least the two connecting elements (10, 11, 31, 32) connect the pipe segments (1, 2, 21, 22) in a longitudinal direction (L) of the pipe segments (1, 2, 21, 22) in a form-fitting and/or force-fitting manner.

13. Connection according to claim 12, **characterised in that** the separating layer (4, 14) is provided between the connecting elements (10, 11, 31, 32) for establishing the connection (3, 20) and **in that**, preferably, the separating layer (4, 14) is a film, preferably a plastic film, in particular a film made of polyvinyl chloride (PVC) and/or polytetrafluoroethylene (PTFE).

14. Connection according to claim 12 or 13, **characterised in that** the connecting elements (10, 11, 31, 32) in the annular gap (5, 27) are designed at least in sections at least substantially cylindrically and/or at least substantially conically.

15. Connection according to any one of claims 12 to 14, **characterised in that** the pipe segments (1, 2, 21, 22) are designed cylindrically or conically at least in the region of the annular gap (5, 27) and/or **in that** the pipe segments (1, 2, 21, 22) are pipe segments (1, 2, 21, 22) of an offshore structure and/or **in that** the pipe segments (1, 2, 21, 22) are tower segments of a wind turbine (W), in particular an offshore wind turbine.

## Revendications

1. Procédé permettant de produire un raccord (3, 20) entre deux segments tubulaires (1, 2, 21, 22) de largeurs différentes, de préférence d'un ouvrage en forme de mât, en particulier d'une éolienne,
- dans lequel le segment tubulaire plus large (1, 31) est emboîté partiellement par une extrémité sur une extrémité du segment plus étroit (2, 32),
- dans lequel les segments tubulaires (1, 2, 21, 22) sont positionnés à distance l'un de l'autre, de sorte qu'un interstice annulaire (5, 27) est créé entre les segments tubulaires (1, 2, 21, 22),
- dans lequel une couche de séparation (4, 14) s'étendant dans le sens de la longueur (L) des segments tubulaires (1, 2, 21, 22) et/ou en direction radiale (R) est agencée dans l'interstice annulaire (5, 27) entre les deux segments tubulaires (1, 2, 21, 22),
- dans lequel l'interstice annulaire (5, 27) est au moins partiellement rempli d'une matière de remplissage (9, 30) de manière adjacente à la couche de séparation (4, 14) et à au moins une face de la couche de séparation (4, 14),
- dans lequel, lors du durcissement de la matière de remplissage (9, 30), la matière de remplissage (9, 30) forme un raccord solide (3, 20) avec uniquement un des segments tubulaires (1, 2, 21, 22) sur une face de la couche de séparation (4, 14) et/ou la matière de remplissage (9, 30) forme un raccord solide (3, 20) avec l'autre des segments tubulaires (1, 2, 21, 22) sur l'autre face de la matière de remplissage (9, 30) et
- dans lequel, après le durcissement de la matière de remplissage (9, 30), les segments tubulaires (1, 2, 21, 22) sont à nouveau séparés l'un de l'autre le long de la couche de séparation (4, 14) avec les éléments de raccordement (10, 11, 21, 22) séparés, en particulier formés par la matière de remplissage (9, 30) durcie.

2. Procédé selon la revendication 1, dans lequel, après la séparation des segments tubulaires (1, 2, 21, 22) le long de la couche de séparation (4, 14), les segments tubulaires séparés (1, 2, 21, 22) sont à nouveau emboîtés de manière à ce qu'au moins les éléments de raccordement (10, 11, 31, 32) formés à partir de la matière de remplissage (9, 30) déjà durcie forment une liaison par la forme et/ou une liaison par la force dans le sens de la longueur (L) des segments tubulaires (1,2,21,22).

3. Procédé selon la revendication 1 ou 2,
- dans lequel des segments tubulaires en acier ou en béton armé sont utilisés comme segments tubulaires (1, 2, 21, 22) et/ou
- dans lequel des segments tubulaires cylindriques ou coniques (1, 2, 21, 22) sont utilisés comme segments tubulaires (1, 2, 21, 22) au moins dans la zone de l'interstice annulaire (5, 27) et/ou
- dans lequel des segments tubulaires (1, 2, 21, 22) sont utilisés comme segments tubulaires (1, 2, 21, 22) d'un ouvrage offshore et/ou
- dans lequel des segments en forme de mât d'une éolienne (W) sont utilisés comme segments tubulaires (1, 2, 21, 22), en particulier d'une éolienne offshore, et/ou
- dans lequel les segments tubulaires (1, 2, 21, 22) sont positionnés concentriquement entre eux en formant un interstice annulaire (5, 27) entre les segments tubulaires (1, 2, 21, 22).

4. Procédé selon l'une des revendications 1 à 3,
- dans lequel on utilise comme couche de séparation (4, 14) un film, de préférence un film plastique, en particulier un film en chlorure de polyvinyle (PVC) et/ou en polytétrafluoroéthylène (PTFE) et/ou
- dans lequel la couche de séparation (4, 14) est constituée, au moins partiellement, d'un métal, comme par exemple de l'aluminium, du fer ou de l'acier, et/ou d'un tissu en fibre de carbone et/ou d'un tissu en fibre de verre et/ou d'un matériau composite renforcé par des fibres et/ou
- dans lequel la couche de séparation (4, 14) est remplacée ou complétée, après la production d'au moins un élément de raccordement (10, 11, 31, 32), par une couche de séparation expansible, en particulier en nattes de bentonite.

5. Procédé selon l'une des revendications 1 à 4,
- dans lequel la couche de séparation (4, 14) est agencée cylindrique, au moins par sections, dans l'interstice annulaire (5, 27) et
- dans lequel, de préférence, au moins la section cylindrique de la couche de séparation (4, 14) s'étend au moins essentiellement de manière concentrique par rapport au segment tubulaire intérieur (2, 32) et/ou au segment tubulaire extérieur (1, 31).

6. Procédé selon l'une des revendications 1 à 5,
- dans lequel l'on prévoit une couche de séparation (4, 14), au moins fermant essentiellement l'interstice annulaire (5, 27) dans le sens de la longueur (L) des segments tubulaires (1, 2, 21, 22), dans l'interstice annulaire (5, 27) entre les deux segments tubulaires (1, 2, 21, 22).

7. Procédé selon l'une des revendications 1 à 6,
- dans lequel la couche de séparation (4, 14) est formée, au moins par sections, conique et/ou en biais dans le sens radial (R) par rapport au sens de la longueur (L) des segments tubulaires (1, 2, 21, 22) et
- dans lequel, de préférence, l'on prévoit la couche de séparation (4), au moins dans la section conique, sur le bord intérieur de l'interstice annulaire (5) dans le sens de la longueur (L) des segments tubulaires (1, 2) plus proche de l'extrémité du segment tubulaire intérieur (1, 2) associée à l'interstice annulaire (5) que sur le bord extérieur de l'interstice annulaire (5) et/ou sur le bord extérieur de l'interstice annulaire (5) dans le sens de la longueur (L) des segments tubulaires (1,2) plus proche de l'extrémité du segment tubulaire extérieur (1,2) associée à l'interstice annulaire (5) que sur le bord intérieur de l'interstice annulaire (5).

8. Procédé selon l'une des revendications 1 à 7,
- dans lequel l'interstice annulaire (5, 27) est rempli, au moins partiellement, avec de la matière de remplissage (9, 30) lorsque le segment tubulaire extérieur (1, 21) est chauffé et/ou lorsque le segment tubulaire intérieur (2, 32) est refroidi et/ou sont à nouveau emboîtés l'un dans l'autre après le durcissement de la matière de remplissage (9, 30) et/ou
- dans lequel les éléments de raccordement durcis (10, 11, 31, 32) sont séparés les uns des autres le long de la couche de séparation (4, 14) lorsque le segment tubulaire extérieur (1, 21) est chauffé et/ou lorsque le segment tubulaire intérieur (2, 22) est refroidi.

9. Procédé selon la revendication 8,
- dans lequel le segment tubulaire extérieur (1, 21) refroidi et/ou le segment tubulaire intérieur (2, 22) sont refroidis à une température inférieure à 20 °C, de préférence inférieure à 15 °C, en particulier inférieure à 10 °C et/ou
- dans lequel le segment tubulaire extérieur (1, 21) chauffé et/ou le segment tubulaire intérieur (2, 22) sont réchauffés à une température supérieure à 20 °C, de préférence supérieure à 30 °C, notamment supérieure à 40 °C.

10. Procédé selon l'une des revendications 1 à 9,
- dans lequel le segment tubulaire extérieur (1, 21) et/ou le segment tubulaire intérieur (2, 22) présente au moins une nervure de butée (12, 33) dans la zone de l'interstice annulaire (5, 27) et
- dans lequel, de préférence, au moins une nervure de butée (12, 33) est prévue essentiellement sur l'ensemble du pourtour et
- dans lequel, de préférence, au moins une nervure de butée (12, 33) est prévue essentiellement en forme d'anneau.

11. Procédé selon l'une des revendications 1 à 10,
- dans lequel on utilise comme matière de remplissage (9, 30) un mortier de scellement et/ou un coulis, et
- dans lequel on utilise, de préférence, un coulis expansible pendant le durcissement, appelé coulis expansif, et
- dans lequel, de préférence, on utilise un coulis avec des agrégats réactifs alcalins-silicium, de l'addition de bentonite, de ciments sulfo-aluminate de calcium et/ou d'aluminate.

12. Raccordement (3, 20) de deux segments tubulaires (1, 2, 21, 22) de largeurs différentes, de préférence d'un ouvrage en forme de mât, en particulier d'une éolienne (W), avec un interstice annulaire (5, 27) entre les extrémités se chevauchant d'un segment tubulaire extérieur (1, 21) plus large et un segment tubulaire intérieur (2, 22) plus étroit en application du procédé selon la revendication 2 et, si nécessaire, l'une des revendications 3 à 11, **caractérisée en ce qu'**un élément de raccordement (11, 32) est solidaire avec le côté périphérique extérieur du segment tubulaire intérieur (1, 31) dans l'interstice annulaire (5, 27), **en ce qu'**un autre élément de raccordement (10, 31) est solidaire avec le côté périphérique intérieur du segment tubulaire extérieur (2, 22) dans l'interstice annulaire (5, 27), **en ce qu'**au moins un des éléments de raccordement (10, 11, 31, 32) est formé par une matière de remplissage (9, 30) durcie et qu'au moins les deux éléments de raccordement (10, 11, 31, 32) relient, par liaison de forme et/ou de force, les segments tubulaires (1,2, 21, 22) dans un sens de la longueur (L) des segments tubulaires (1,2, 21, 22).

13. Raccordement selon la revendication 12, **caractérisé en ce que** l'on prévoit la couche de séparation (4, 14) entre les éléments de raccordement (10, 11, 31, 32) pour produire le raccordement (3, 20) et **en ce que**, de préférence, la couche de séparation (4, 14) est un film, de préférence un film plastique, en particulier un film en chlorure de polyvinyle (PVC) et/ou en polytétrafluoroéthylène (PTFE).

14. Raccordement selon la revendication 12 ou 13, **caractérisé en ce que** les éléments de raccordement (10, 11, 31, 32) sont formés dans l'interstice annulaire (5, 27), au moins par section, au moins essentiellement cylindriques et/ou au moins essentiellement coniques.

15. Raccordement selon l'une des revendications 12 à 14, **caractérisé en ce que** les segments tubulaires (1, 2, 21, 22) sont formés, au moins dans la zone de l'interstice annulaire (5, 27), de façon cylindrique ou conique et/ou **en ce que** les segments tubulaires (1, 2, 21, 22) sont des segments tubulaires (1, 2, 21, 22) d'un ouvrage offshore et/ou **en ce que** les segments tubulaires (1,2,21,22) sont des segments en forme de mât d'une éolienne (W), en particulier d'une éolienne offshore.
